# EUROPÄISCHE PATENTSCHRIFT

(11) **EP 1 482 857 B1**
(45) Veröffentlichungstag und Bekanntmachung des Hinweises auf die Patenterteilung: **16.01.2013**
(21) Anmeldenummer: 03700298.7
(22) Anmeldetag: 29.01.2003
(51) Int. Cl.: A61C 7/16, A61C 7/14, A61C 7/12, A61C 7/00

(54) **Kieferorthopädisches Set**
Orthodontic set
Set d'orthodontie

(30) Priorität: 13.03.2002 CH 433022002
(43) Veröffentlichungstag der Anmeldung: 08.12.2004
(73) Patentinhaber: Von Mandach, Christoph, 5200 Brugg (CH)
(72) Erfinder: Von Mandach, Christoph, 5200 Brugg (CH)
(74) Vertreter: Schneider Feldmann AG Patent- und Markenanwälte
(86) Internationale Anmeldenummer: PCT/CH2003/000074
(87) Internationale Veröffentlichungsnummer: WO 2003/075782

(56) Entgegenhaltungen:
- WO-A-00/33760
- WO-A-00/57809
- WO-A-01/05324
- US-A- 4 657 508
- US-A- 5 354 199

## Beschreibung

Die vorliegend Erfindung betrifft ein kieferorthopädisches Befestigungsteil, wie Knöpfe, Haken, Ösen oder Brackets auf Zähnen, und Mittel an dessen Anbringung auf einen Zahn.

Eine derartige Kombination ist beispielsweise aus der US-4,657,508 bekannt.

Die Kieferorthopädie beschäftigt sich unter anderem mit der Korrektur der Stellung der Zähne. Hierzu sind verschiedenste kieferorthopädische Apparate, aber auch Vorrichtungen zur Übermittlung von Kräften und/oder zur Fixation und Stabilisierung von einem oder mehreren Zähnen notwendig. Bei den Vorrichtungen handelt es sich einerseits um kieferorthopädische Befestigungsteile und andererseits um Teile zur Übertragung von Zug- oder Druckkräften. Während die Zug- oder Druckkräfte durch Drahtbögen, Gummielastics, Metallfedern und Ligaturen übertragen werden, sind die hier insbesondere interessierenden kieferorthopädischen Befestigungsteile insbesondere Haken (Hooks), Knöpfe (Buttons), zum Teil Ösen und vorwiegend Brackets.

Die hier besonders interessierenden kieferorthopädischen Befestigungsteile lassen sich mechanisch mit sogenannten Bändern aus Metall an den Zähnen befestigen oder sie lassen sich direkt auf die Zähne aufkleben. Für den Tragkomfort ist es anzustreben, einerseits die kieferorthopädischen Befestigungselemente möglichst mit geringer Bauhöhe zu versehen und andererseits die Verbindungsstelle zwischen dem Befestigungsteil und dem kräfteübertragenden Teil möglichst nahe am Zahn anzuordnen.

Diesen Forderungen sind selbstverständlich allein schon durch die mechanische Festigkeit Grenzen gesetzt aber wesentlicher ist das Problem, dass solche kieferorthopädischen Befestigungsteile einerseits beim Aufkleben gehalten werden müssen und andererseits deren korrekte Lage relativ zum Zahn während des Aufklebens beachtet werden soll.

Bedenkt man, dass solche kieferorthopädischen Befestigungsteile eine Klebfläche als Basis aufweisen, deren Seitenkanten üblicherweise in einer Grösse von 2 bis 4 Millimeter liegen, so dürfte as naheliegend sein, dass bei solchen Dimensionen eine exakte Ausrichtung auf beispielsweise ca. 5° genau weitgehend illusorisch ist. Diese Ausrichtung erfolgt nicht absolut zu einer waagrechten oder senkrechten Grundrichtung, sondern erfolgt relativ einerseits zur Achse des Zahnes, an dem das entsprechende Befestigungsteil montiert wird und andererseits relativ zu den Gegebenheiten des Zahnbogens des Patienten.

Insbesondere die korrekte Anordnung von Brackets ist von Bedeutung, da in diesen ein sogenannter Slot, beziehungsweise eine Führungsnut verläuft, in die ein Drahtbogen eingelegt wird, der so vorgeformt ist, dass er auf die Brackets und damit auf den Zahn die entsprechenden korrekturausübenden Kräfte zu übertragen vermag.

Rein beispielsweise wird hier auf einige Schutzrechte hingewiesen, die sich mit solchen Brackets mit entsprechenden Slots und darin aufzunehmenden Drahtbogen befassen. Die CH-A-685'853 sieht zusätzlich zu dem bekannten Slot einen Tunnel vor, der zur Verankerung von Teilbögen zu dienen vermag. Während dieses Bracket ohne Schliesslasche ausgerüstet ist, sind in letzter Zeit diverse Brackets auf den Markt gekommen, die mit einer schwenkbaren und neuerdings auch verschiebbaren Lasche versehen sind, die einerseits den Bogen im Slot klemmend zu halten vermag und andererseits gegen ein Öffnen gesichert ist. Als Beispiele solcher Brackets wird rein beispielsweise auf die WO-00/57809, die WO-00/33760, die WO-01/05324 oder die US-A-6,071,119 verwiesen.

All diese Dokumente zeigen auch, dass die entsprechenden Befestigungsteile, hier insbesondere die Brackets, mit einer entsprechenden Grundplatte ausgerüstet sind, die einerseits die Basis vergrößert und als Klebefläche dient und andererseits auch einen gewissen Richteffekt auszuüben vermag.

Es ist die Aufgabe der vorliegenden Erfindung ein kieferorthopädisches Befestigungsteil und Mittel zu deren Befestigung auf einen Zahn zu schaffen, mittels dem kieferorthopädische Befestigungsteile optisch besser kontrollierbar und entsprechend exakter unter Berücksichtigung der vorzunehmenden Korrekturen auf einer Zahnfläche aufgeklebt werden können.

Diese Aufgabe wird mit den Merkmalen des Patentanspruches 1 gelöst. Es ist eine weitere Aufgabe der vorliegenden Erfindung, kieferorthopädische Befestigungsteile zur klebbaren Verbindung auf einer Zahnoberfläche zu schaffen, die in vielen Fällen keine wesentliche Anpassung der Klebfläche an die Zahnoberfläche erforderlich macht.

In der anliegenden Zeichnung sind die zusammenwirkenden Elemente dargestellt und an Hand der nachfolgenden Beschreibung erläutert und deren Zusammenwirken beim Anbringen eines Kieferorthopädischen Befestigungselementes auf einen Zahn erklärt.

Es zeigt:
- Figur 1: ein kieferorthopädisches Befestigungsteil, beispielsweise ein Bracket
- Figur 2: einen entsprechenden Protektor angepasst auf die Gestaltungsform des kieferorthopädischen Befestigungsteiles nach Figur 1 und
- Figur 3: einen auf den Protektor aufsetzbaren und diesen umhüllenden Applikator mit entsprechenden Anzeigen.
- Figur 4: zeigt in perspektivischer Darstellung ein Schloss in der Form eines Drahtbügels.
- Figur 5 und 6: zeigen die Klebeflächenstrukturen eines zweiteiligen Befestigungsteiles beider Teile einzeln und
- Figur 8: in zusammengefügter Position, während

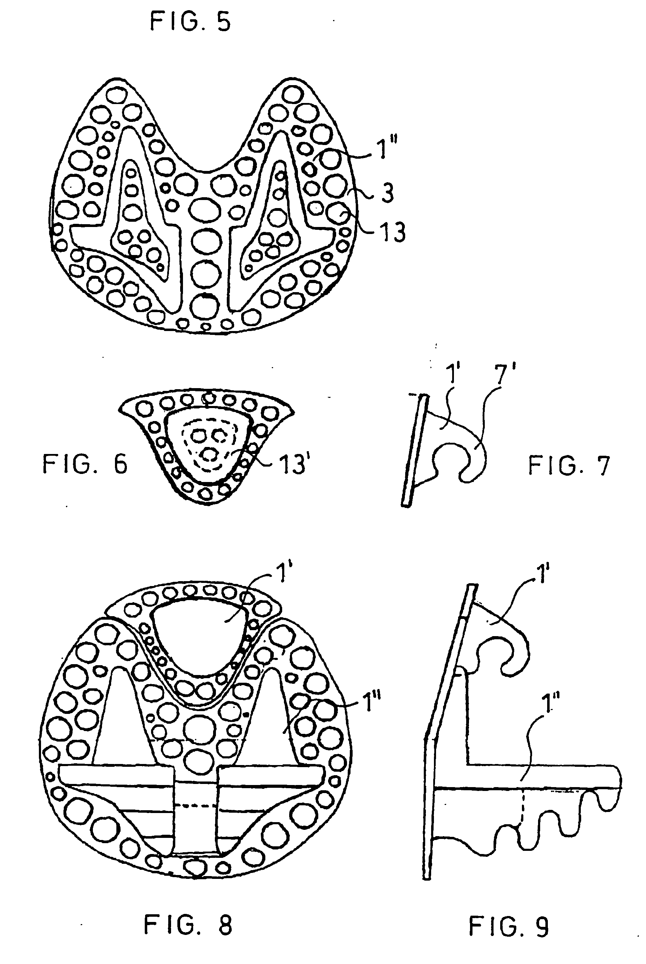

- Figur 7: das kleinere Teil des zweiteiligen Befestigungsteiles in der Seitenansicht zeigt und
- Figur 9: die Seitenansicht der zusammengefügten Teile darstellt.

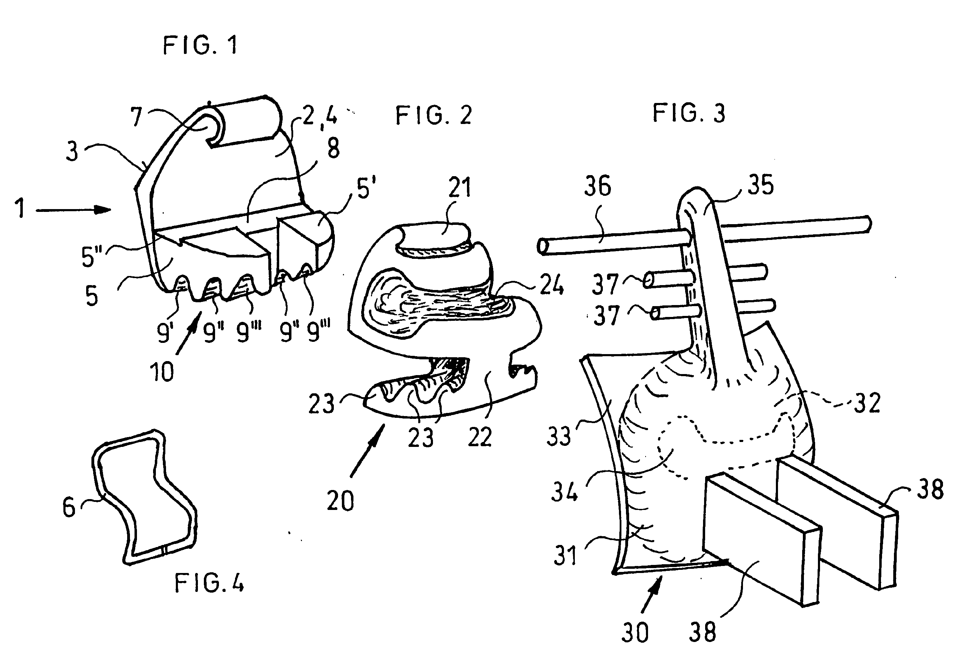

Bei dem in der Figur 1 dargestellten Bracket handelt es sich um eine Ausführungsform eines kiefer orthopädischen Befestigungsteiles. Wie bereits erwähnt, können die Befestigungsteile auch Knöpfe, Haken oder Ösen sein, je nach den kieferorthopädischen Bedingungen, die zu erfüllen sind.

Zur Befestigung eines Kieferorthopädischen Befestigungteiles auf einen Zahn sind immer drei Elemente erforderlich, nämlich als erstes das kieferorthopädische Befestigungsteil 10, ein ein- oder mehrteiliger Protektor, der die dem Zahn abgelegene Fläche des kieferorthopädischen Befestigungsteiles schützend abdeckt und entsprechend eine komplementäre Aufnahmeausnehmung aufweist, wobei dieser Protektor mit 20 bezeichnet ist, und schliesslich einen Applikator 30. Nachfolgend werden diese Elemente in der vorgenannten Reihenfolge detailliert beschrieben.

Beim hier dargestellten kieferorthopädischen Befestigungsteil 10 handelt es sich um ein einteiliges Bracket, das gesamthaft mit 1 bezeichnet ist. Dieses weist eine Basis 2 auf, die generell als Basis des kieferorthopädischen Befestigungsteiles bezeichnet wird. Dessen zur Zahnoberfläche zu liegen kommende Oberfläche stellt die Klebefläche 3 der Basis 2 dar. Der Klebefläche 3 gegenüber liegend bildet die Basis 2 eine vertikale Anlagefläche 4 für einen hier nicht dargestellten Korrekturbogen. An der Basis des kieferorthopädischen Befestigungsteiles 2 ist ein eigentliches Befestigungselement 5 angeformt. Dieses Befestigungselement 5 kann die Form eines Pilzes haben und wird in diesem Fall Knopf oder Button genannt oder kann die Gestalt von Haken oder Ösen haben. Im Falle eines Brackets ist dieses Befestigungselement 5 als horizontale Anlagefläche 5' für den bereits erwähnen legierten Korrekturbogen, gestaltet. Hierbei kann in der horizontalen Anlagefläche 5' auch eine Einlagenut 5" für den Korrekturbogen vorgesehen sein. Dies ist strichliniert eingezeichnet. Der Korrekturbogen wird auf der vertikalen Anlagefläche beziehungsweise an der horizontalen Anlagefläche 5' oder in der Einlagenut 5" fixierend gehalten mittels eines sogenannten Schlosses 6, das plattenförmig oder aus einem Drahtbügel, wie hier dargestellt, gefertigt sein kann. Für die Einhängung des entsprechenden Drahtbügels der als Schliessfedeir dient, ist eine entsprechende Lagerung 7 in der Form einer Umbördelung gestaltet. Auf der Unterseite des Befestigungselementes 5 sind verschiedene Positionen 9', 9", 9'" in der Gestalt von Rasterkerben für die Schliessfeder das Schlosses 6 eingeformt. Die Erfindung lässt praktisch jede Gestaltungsform eines Schlosses zu. Das Befestigungselement 5 weist ferner vertikal zur Basis des kieferorthopädischen Befestigungsteiles verlaufende Rasternuten 8 auf, die einerseits zur korrekten Positionierung des noch zu beschreibenden Protektors dienen und andererseits zur Fixierung der verschiedenen Schlösser.

Auffällig ist am kieferorthopädischen Befestigungsteil 10 insbesondere dessen Gestaltung der Basis und hier insbesondere dessen Klebefläche. Während üblicherweise die Klebefläche 3 der Basis bei herkömmlichen kieferorthopädischen Befestigungselementen der Gestalt der Zahnoberfläche nachempfunden ist, ist hier die Klebefläche des Befestigungsteiles in mindestens einer Richtung konvex gewölbt gestaltet. Von der Gestalt der Zahnoberfläche wird folglich bewusst abgewichen. Die spezielle Bedeutung der so gestalteten Klebefläche 3 wird später in Zusammenhang mit dem erfindungsgemässen Verfahren näher erläutert.

Hat das kieferorthopädische Befestigungsteil nicht die Gestalt eines Brackets, so weist es doch eine entsprechende Basis 2 des kieferorthopädischen Befestigungsteiles auf und hat ebenfalls entsprechend eine Klebefläche 3, die auch hier wiederum in mindestens einer Richtung konvex gewölbt ist. Handelt es sich beim kieferorthopädischen Befestigungsteil beispielsweise um ein Button, so entfallen selbstverständlich jene Elemente, die in Zusammenhang mit der Schliessfeder erforderlich sind.

Auf das. kieferorthopädische Befestigungsteil 10 wird ein Protektor 20 angebracht. Wie bereits der Name sagt, soll der Protektor das kieferorthopädische Befestigungsteil 10 gegen Verschmutzung, insbesondere durch den anzubringenden Kleber, schützen. Um dies zu erreichen hat der Protektor 20 eine zum kieferorthopädischen Befestigungsteil komplementäre Gestalt. Die zur Verbindung mit kraftübertragenden Elementen zusammenwirkenden Formteile werden durch den Protektor dichtend abgedeckt. Der Protektors 20, der passend für das Bracket 1 gestaltet ist, weist eine Haltewulst 21 auf, die in die Lagerung 7 in der Form einer Umbördelung einzugreifen vermag. Des weiteren hat er die komplementäre Form der vertikalen Anlagefläche 4 sowie des Befestigungselementes 5-Entsprechend der Nut 8, die senkrecht zur Basis verläuft, ist ein entsprechender Steg 22 vorhanden, sowie Rippen 23, die die komplementäre Form der Rasternuten 9',9",9'" aufweisen. Üblicherweise wird die Aussenkontur des Protektors 20 hintergriff frei gestaltet sein. In der hier dargestellten Form trifft dies jedoch nicht zu. Vielmehr ist hier ein Haltemaul 24 eingeformt,- welches zur einrastenden, formschlüssigen Verbindung mit einem noch zu beschreibenden Applikator dient.

Das Bracket kann auch mehrteilig gestaltet sein. In diesem Falle dient der Protektor gleichzeitig als Montagelehre, um die Teile des Brackets zusammenzuhalten während des Richtens und Klebens.

Handelt es sich beim kieferorthopädischen Befestigungsteil um ein anderes Element als ein Bracket, so muss selbstverständlich der Protektor 20 jener Form komplementär angepasst sein. Diese komplementäre Anpassung der Form kann bei gewissen Formen von kieferorthopädischen Befestigungsteilen nicht einstückig gestaltet sein. Entsprechend muss in solchen Fällen der Protektor zwei- oder mehrteilig zusammensteckbar gestaltet sein. Insbesondere bei Knöpfen, sogenannten Buttons, kann der Protektor dann beispielsweise aus zwei Halbschalen bestehen, die formschlüssig zusammenteckbar sind. Bei nochmals anderen Gestalten der kieferorthopädischen Befestigungselemente sieht der Protektor entsprechend wiederum anders aus, doch ist es dem Fachmann klar, wie er einen Protektor zu gestalten hat, der eine komplementäre Aufnahmeform für den kieferorthopädischen Befestigungsteil bilden soll.

Letztlich benötigt man zur Anbringung des kieferortho pädischen Befestigungsteiles einen Applikator, der insgesamt mit 30 bezeichnet ist. Dieser Applikator 30 hat einen Aufnahmekörper 31, in dem ein Aufnahmehohlraum 32 eingeformt ist, in welchem die komplementäre Form des zusammengefügten kieferorthopädischen Befestigungsteiles und des ihn schützenden Protektors 20 formschlüssig Aufnahme findet. Die Aufnahme erfolgt nicht nur formschlüssig sondern auch dichterd. Arm Aufnahmekörper 31 ist eine Dichtplatte 33 abgeformt, die dichtend auf der Zahnoberfläche aufdrückbar ist. Zwischen der Dichtfläche 33 und der Klebefläche 3 des zusammen mit dem Protektor 20 im Applikator 30 eingelegten kieferorthopädischen. Befestigungsteiles 10 verbleibt ein gewisser Hohlraum, der bei der Applikation des kieferorthopädischen Befestigungsteiles mit Klebstoff gefüllt ist. Dieser verbleibende Hohlraum wird sichergestellt durch die Tatsache, dass die Klebefläche 3 mindestens in einer Richtung konvex gewölbt ist. Hierbei ist die Wölbung so gestaltet, dass deren höchster Punkt, wenn zusammen mit dem Protektor 20 korrekt im Applikator eingelegt, sich maximal bis kurz unter die Dichtfläche 33 erstreckt. Damit ist sichergestellt, dass ein durchgehender Klebstofffilm zwischen Zahn und kieferorthopädischem Befestigungsteil 10 gebildet wird.

In der her dargestellten Ausführungsform greift in den Aufnahmehohlraum 32 ein Haltekloben 34 ein, der einstückig am Applikator 30 angeformt ist und, bei der korrekten Einlage des auf dem kieferorthopädischen Befestigungsteil 10 angebrachten Protektor 20, ein das Haltemaul 24 formschlüssig einrastet.

Am Applikator 30 sind Hilfsmittel zur Ausrichtung des Applikators beziehungsweise des darin gehaltenen kieferorthopädischen Befestigungsteiles relativ zum Zahn vorhanden. Bei diesen Hilfsmitteln handelt es sich um einen Zeiger 35, der die Zahnachse darstellt und mindestens einen an diesem Zeiger 35 befestigten Angulationszeiger 36, der die Angulationsausrichtung erkennbar macht. Der Angulationszeiger ist insgesamt länger als die maximale Breite des Applikators 30. Der Angulationsanzeiger indiziert somit die x-Richtung des zu befestigenden kieferorthopädischen Befestigungsteiles. Diese Anzeige ist insbesondere bei der Applikation von Brackets von Bedeutung. Der Zeiger 35, der entsprechend die y-Richtung angibt, kann mit mehreren Fortsätzen 37 versehen sein, die ein Raster auf der y-Achse ergeben. Praktisch senkrecht zur Dichtfläche 33 sind auf der Oberfläche des Aufnahmekorpers 31 zwei parallel verlaufende weitere Hilfsmittel in der Form von Torqueanzeigen 38 angebracht. Die Torqueanzeigen 38 machen die Torqueausrichtung erkennbar. Die Torqueanzeigen verlaufen somit parallel zur z-Achse und erlauben damit zusammen mit den anderen Zeigern, die als Hilfsmittel vorhanden sind, eine optisch erkennbare, wesentlich verbesserte und folglich präzisere Applikation eines kieferorthopädischen Befestigungsteiles auf einem Zahn.

Durch die Beschreibung der einzelnen zur Anwendung kommenden Elemente ist im wesentlichen auch schon die Anbringung der Befestigungselemente verdeutlicht worden. Trotzdem seien hier nochmals die einzelnen Schritte des Anbringens chronologisch aufgezeigt. In einem ersten Schritt wird der Kieferorthopäde bei der Planung der Zahnstellungskorrektur die Art der zu verwendenden kieferorthopädischen Befestigungsteile auswählen. Hierauf wird er das gewünschte kieferorthopädische Befestigungsteil mittels eines Protektors 20 an der dem Zahn abgelegenen Fläche abdecken. Der Protektor schützt so mit seiner komplementären Aufnahmefläche jene Funktionsflächen des kieferorthopädischen Befestigungsteiles, die eben zur Befestigung von entsprechenden kräfteübertragenden Teilen dienen. Das so abgedeckte kieferorthopädische Befestigungsteil wird zusammen mit dem bereits erwähnten Protektor 20 in den Aufnahmehohlraum 32 eines entsprechenden Applikators eingelegt, wobei der Applikator eine entsprechend komplementär zu den Teilen 10 und 20 gestaltete Form aufweist. Gegebenenfalls wird nun der Klebstoff auf die Klebefläche 3 in einem gewissen Übermaß angebracht, so dass der verbleibende Hohlraum zwischen der Klebefläche 3 und der Dichtfläche des Applikators 33 vollständig gefüllt ist, Hierauf wird man das Befestigungsteil mit Hilfe des Applikators 3' in der korrekten Lage auf den Zahn ausrichten und andrücken, worauf man dann den Klebstoff aushärten lässt. Mit der Wahl von blaulichtdurchlässigen Kunststoffen für den Protektor und den Applikator lässt sich der Klebstoff optimal mit einer Polymerisationslampe aushärten. Ist die Härtung abgeschlossen, so wird man zuerst den Applikator entfernen und danach den Protektor vom kieferorthopädischen Befestigungsteil ablösen. Schliesslich wird man eventuell noch vorhandenen überflüssigen Klebstoff von der Zahnoberfläche entfernen.

Vorzugsweise wird man aus Festigkeitsgründen die kieferorthopädischen Befestigungsteile aus den heute üblichen Materialien, nämlich entsprechenden Metalllegierungen oder Keramik, Glas oder hochfestem Kunststoff, fertigen. Der Protektor 20 wird vorzugsweise aus einem relativ weichen Kunststoff hergestellt. Er passt sich so den erforderlichen. Konturen bestens an. Auch der Applikator wird vorzugsweise aus Kunststoff gefertigt.

Fraktisch müssen alle drei Teile, nämlich das kieferorthopädische Befestigungsteil, der Protektor 20 und der Applikator 30 formlich aufeinander abgestimmt sein. Es ist jedoch durchaus möglich, die Aussenkontur des Protektors unabhängig von der Gestalt der kieferorthopädischen Befestigungsteile immer gleich zu gestalten. In diesem Falle braucht dann der Applikator nicht mehr verschiedenen Protektoren angepasst zu sein sondern kann immer dieselbe Form aufweisen.

Die Anpassung der Klebefläche 3 an die Gestalt der Zahnoberfläche entfällt, weil diese Anpassung auf den Zahn von der Kontur des Applikators übernommen wird. Damit werden weniger verschiedene Formen von kieferorthopädischen Befestigungsteilen erforderlich sein. Die eigentliche Anpassung wird man an der Dichtfläche 33 des Applikators 30 vornehmen. Da dieses Element aus Kunststoff ist und eine entsprechende Elastizität hat, ist dies einerseits schneller machbar und andererseits weniger heikel, da die Elastizität gewisse Ungenauigkeiten aufzunehmen vermag.

Die Dichtfläche 33 des Applikators 30 erlaubt es, dass die kieferorthopädischen Befestigungselemente von einem Klebstoff umhüllenden Film teilweise umgeben sind und folglich die
Haltefestigkeit praktisch der Adhäsionskraft des Klebers entspricht. Um die optimale Klebkraft zu erreichen, wird man die Klebefläche vorzugsweise mit einer Struktur versehen. In der Figur 5 ist die Struktur einer solchen Klebefläche gezeigt. Die Klebefläche 3 weist entsprechende Vertiefungen oder Überhöhungen 13 auf, die unregelmässig über die Fläche 3 verteilt sind. Im vorliegenden Beispiel wird eine Klebefläche eines hier zweiteilig gestalteten kieferorthopädischen Befestigungselementes gezeigt. Dieses kieferorthopädische Befestigungselement kann beispielsweise aus einem Teil 1', wie in Figur 7 in der Seitenansicht und in der Figur 6 frontal auf, die Klebefläche gesehen, bestehen, wobei hier der Haken 7' für sich als Befestigungshaken vorgesehen sein kann oder auch als Lagerung für ein Schloss, welches mit dem zweiten Bracketteil 1" zusammenwirkt. Der Protektor 20 wie auch der Applikator 30 wirken in diesem Fall gleichzeitig auch als Montagelehre, wobei die beiden kieferorthopädischen Befestigungsteile 1' und 1" in exakter Relation zueinander gehalten werden und gemeinsam im Klebstoff eingegossen und gehärtet werden. Neben der hier dargestellten zweiteiligen Form ist es selbstverständlich auch möglich, ein kieferorthopädisches Befestigungsteil aus drei oder noch mehr Teilen zusammenzufügen. Dies ergibt den Vorteil, dass mit mehreren einfachen Grundelementen verschiedene kieferorthopädische Befestigungselemente komplexer Form gestaltet werden können, ohne dass hierfür eine Vielzahl solcher komplexer kieferorthopädischer Befestigungsteile gesamthaft geformt werden müssen, die entsprechend patientengerecht angepasst sein müssten.

Es ist vorgesehen, dass der Verwender vom Hersteller im Prinzip mit einem vorgefertigten Set beliefert werden wird. Dabei ist das zu montierende kieferorthopädische Befestigungselement direkt im Applikator gehalten.

## Patentansprüche

1. Set aus einem kieferorthopädischen Befestigungsteil zur klebbaren Verbindung auf einer Zahnoberfläche (10) und Mitteln zu dessen Anbringung auf einem Zahn, umfassend einen Protektor (20) und einem Applikator, wobei das Befestigungsteil eine Basis (2) mit konvex geformter Klebefläche (3) aufweist, wobei
der Protektor (20) eine zum kieferorthopädischen Befestigungsteil komplementäre Gestalt hat, in der zur Verbindung unit kraftübertragenden Elementen dienende Formteile des Befestigungsteils dichtend abgedeckt sind; und dass der Applikator (30)
einen Aufnahmehohlraum umfasst (32) in dem das zusammengefügte Befestigungsteil (10) und der ihn schützende Protektor (20) komplementär dichtend Aufnahme findet, und dass am Applikator Hilfsmittel (35, 36, 38) zur Ausrichtung des aufzuklebenden kieferorthopädischen Befestigungsteils (10) relativ zum Zahn vorhanden sind, und dass weiterhin zwischen einer Dichtfläche (33) des Applikators (30) und der Klebefläche des Befestigungsteiles (10) ein Zwischenraum als Klebstoffaufnahmeraum verbleibt.

2. Set nach Anspruch 1, **dadurch gekennzeichnet, dass** das Befestigungsteil (5, 5') mehrteilig ist.

3. Set nach Anspruch 1, **dadurch gekennzeichnet, dass** die Klebefläche (3) mit einer die Haftung erhöhenden Struktur und Oberfläche versehen ist.

4. Set nach Anspruch 1, **dadurch gekennzeichnet, dass** der Protektor (20) zusammen mit dem kieferorthopädischen Befestigungsteil (10) eine eine hintergrifffreie Aussenkontur aufweisende Form ergibt.

5. Set nach Anspruch 1, **dadurch gekennzeichnet, dass** der Protektor aus Kunststoff gefertigt ist.

6. Set nach Anspruch 1, **dadurch gekennzeichnet, dass** der Protektor (20) mehrteilig zusammensteckbar gestaltet ist.

7. Set nach einem der Ansprüche 1-6, **dadurch gekennzeichnet, dass** der Applikator einen das eingelegte kieferorthopädische Befestigungsteil (10) geschlossen umlaufenden Rand als Dichtfläche aufweist, der eine Fläche definiert, die die Klebefläche des eingelegten Befestigungsteiles (10) berührt oder zu dieser distanziert verläuft.

8. Set nach Anspruch 1, **dadurch gekennzeichnet, dass** das mindestens eine Hilfsmittel ein Angulationsanzeiger (36) ist, der die Angulationsausrichtung erkennbar macht.

9. Set nach Anspruch 1, **dadurch gekennzeichnet, dass** mindestens ein weiteres Hilfsmittel ein Torqueanzeiger (38) ist, der die Torqueausrichtung erkennbar macht.

10. Set nach Anspruch 1, **dadurch gekennzeichnet, dass** das Hilfsmittel (35, 36, 38) integral am Applikator (30) angeformt ist.

11. Set nach Anspruch 1, **dadurch gekennzeichnet, dass** der Applikator aus Kunststoff gefertigt ist.

12. Set nach Anspruch 9, **dadurch gekennzeichnet, dass** zwei parallel verlaufende Torqueanzeiger (38) angebracht sind.

## Claims

1. A set consisting of an orthodontic fastening part (10) for adhesive bonding to the surface of a tooth and means for applying said fastening part to a tooth, comprising a protector (20) and an applicator, wherein the fastening part has a base (2) with a convexly curved gluing face (3), wherein the protector (20) is shaped in a manner complementary to the orthodontic fastening part, in which shaped parts of the fastening part used for connection to force-transmitting elements are sealingly covered, and wherein the applicator (30) comprises a receiving cavity (32), in which the assembled fastening part (10) and the protector (20) protecting it are sealingly received in a complementary manner, and wherein aids (35, 36, 38) for aligning the orthodontic fastening part (10), which is to be glued, relative to the tooth are provided on the applicator, and wherein a gap also remains as a glue receiving space between a sealing face (33) of the applicator (30) and the gluing face of the fastening part (10).

2. The set according to Claim 1, **characterised in that** the fastening part (5, 5') is formed in a number of parts.

3. The set according to Claim 1, **characterized in that** the gluing face (3) is provided with a structure and surface increasing the adhesion.

4. The set according to Claim 1, **characterised in that** the protector (20) together with the orthodontic fastening part (10) produces a shape having an outer contour without undercuts.

5. The set according to Claim 1, **characterised in that** the protector is fabricated from plastic.

6. The set according to Claim 1, **characterised in that** the protector (20) is designed such that it can be plugged together in a number of parts.

7. The set according to one of Claims 1-6, **characterised in that** the applicator has an edge surrounding the inserted orthodontic fastening part (10) in a closed manner as a sealing face, which defines a face that contacts the inserted fastening part (10) or runs at a distance therefrom.

8. The set according to Claim 1, **characterised in that** the at least one aid is an angulation pointer (36), which makes it possible to identify the angulation alignment.

9. The set according to Claim 1, **characterised in that** at least one further aid is a torque indicator, which makes it possible to identify the torque alignment.

10. The set according to Claim 1, **characterised in that** the aid (35, 36, 38) is integrally formed in one piece on the applicator (30).

11. The set according to Claim 1, **characterised in that** the applicator is fabricated from plastic.

12. The set according to Claim 9, **characterised in that** two torque indicators (38) running in parallel are attached.

## Revendications

1. Kit, composé d'une pièce de fixation orthodontique (10) pour une connexion adhésive sur une surface dentaire et de moyens pour son installation sur une dent, comprenant un protecteur (20) et un applicateur, dans lequel la pièce de fixation présente une base (2) avec une surface adhésive (3) de forme convexe, dans lequel le protecteur (20) présente une configuration complémentaire à la pièce de fixation orthodontique, dans lequel des pièces moulées de la pièce de fixation, qui servent à la connexion avec des éléments de transmission de force, sont recouvertes de manière étanche, et dans lequel l'applicateur (30) comprend une cavité de réception (32) qui reçoit de manière étanche par complémentarité la pièce de fixation (10) et le protecteur (20) qui la protège, et dans lequel il existe au niveau de l'applicateur des moyens auxiliaires (35, 36, 38) pour aligner par rapport à la dent la pièce de fixation orthodontique (10) à coller, et dans lequel, en outre, entre une surface d'étanchéité (33) de l'applicateur (30) et la surface adhésive de la pièce de fixation (10), il reste un espace comme espace de réception d'adhésif.

2. Kit selon la revendication 1, **caractérisé en ce que** la pièce de fixation (5, 5') est composée de plusieurs parties.

3. Kit selon la revendication 1, **caractérisé en ce que** la surface adhésive (3) est munie d'une texture et d'une surface augmentant l'adhérence.

4. Kit selon la revendication 1, **caractérisé en ce que** le protecteur (20) produit avec la pièce de fixation orthodontique (10) une forme présentant un contour extérieur sans contre-dépouille.

5. Kit selon la revendication 1, **caractérisé en ce que** le protecteur est réalisé en matière plastique.

6. Kit selon la revendication 1, **caractérisé en ce que** le protecteur (20) est configuré en plusieurs parties de manière emboîtable.

7. Kit selon l'une quelconque des revendications 1 à 6, **caractérisé en ce que** l'applicateur présente un bord entourant complètement la pièce de fixation orthodontique (10) mise en place, comme une surface d'étanchéité, et définissant une surface en contact avec la surface adhésive de la pièce de fixation (10) mise en place ou s'étendant à distance de celle-ci.

8. Kit selon la revendication 1, **caractérisé en ce que** ledit au moins un moyen auxiliaire est un indicateur d'angulation (36) qui permet de visualiser l'alignement angulaire.

9. Kit selon la revendication 1, **caractérisé en ce que** ledit au moins un autre moyen auxiliaire est un indicateur de couple (38) qui permet de visualiser l'alignement de couple.

10. Kit selon la revendication 1, **caractérisé en ce que** le moyen auxiliaire (35, 36, 38) est rapporté intégralement au niveau de l'applicateur (30).

11. Kit selon la revendication 1, **caractérisé en ce que** l'applicateur est réalisé à partir d'une matière plastique.

12. Kit selon la revendication 9, **caractérisé en ce que** deux indicateurs de couple (38) s'étendant en parallèle sont installés.
